(19) Europäisches Patentamt
European Patent Office
Office européen des brevets

(11) Veröffentlichungsnummer: **0 316 778 B1**

# (12) EUROPÄISCHE PATENTSCHRIFT

(45) Veröffentlichungstag der Patentschrift: **27.12.91**

(51) Int. Cl.5: **C09B 62/008**, D06P 1/38

(21) Anmeldenummer: **88118777.7**

(22) Anmeldetag: **11.11.88**

Die Akte enthält technische Angaben, die nach dem Eingang der Anmeldung eingereicht wurden und die nicht in dieser Patentschrift enthalten sind.

## (54) 2-Hydroxy-pyridon-Azoverbindungen, Verfahren zu ihrer Herstellung und ihre Verwendung als Farbstoffe.

(30) Priorität: **20.11.87 DE 3739350**

(43) Veröffentlichungstag der Anmeldung:
**24.05.89 Patentblatt 89/21**

(45) Bekanntmachung des Hinweises auf die Patenterteilung:
**27.12.91 Patentblatt 91/52**

(84) Benannte Vertragsstaaten:
**BE CH DE ES FR GB IT LI**

(56) Entgegenhaltungen:
**EP-A- 0 142 863**
**FR-A- 2 409 289**
**GB-A- 2 026 013**
**US-A- 3 926 944**

**CHEMICAL ABSTRACTS, Band 98, Nr. 18, 1983, Seite 88, Zusammenfassung Nr. 145036z, Columbus, Ohio, US; & PL-A-113 110 (OSRODEK BADAWCZO-ROZWOJOWY PRZEMYSLU BARWNIKOW "ORGANIKA") 30-06-1982**

(73) Patentinhaber: **HOECHST AKTIENGESELLSCHAFT**
**Postfach 80 03 20**
**W-6230 Frankfurt am Main 80(DE)**

(72) Erfinder: **Tappe, Horst, Dr.**
**Ringstrasse 9**
**W-6057 Dietzenbach(DE)**
Erfinder: **Oehme, Dieter**
**Potsdamer Strasse 18**
**W-6093 Flörsheim am Main(DE)**
Erfinder: **Russ, Werner Hubert, Dr.**
**Berliner Strasse 10**
**W-6238 Hofheim am Taunus(DE)**

EP 0 316 778 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Faserreaktive, wasserlösliche Azoverbindungen mit Farbstoffeigenschaften, die eine 2-Hydroxy-pyridon-Kupplungskomponente besitzen, sind in der Literatur bereits beschrieben, wie beispielsweise in der US-Patentschrift 4 504 273, in den europäischen Patentanmeldungs-Veröffentlichungen Nrs. 0 080 352A, 0 078 024A und 0 107 614A und in den britischen Patentschriften Nrs. 1 271 226 und 2 010 882. Die in diesen Schriften durch Beispiele beschriebenen Azofarbstoffe sind aus heutiger Sicht für eine technische Verwertung mit Nachteilen behaftet, sei es durch ihren Molekülaufbau, der eine aufwendige Synthese erfordert, oder sei es wegen nicht mehr den heutigen Anforderungen genügender Eigenschaften. Des weiteren sind faserreaktive 2-Hydroxy-pyridon-Azoverbindungen aus der europäischen Patentanmeldungs-Veröffentlichung Nr. 0 181 585A und der US-PS 4 659 807 bekannt.

Weiterhin sind aus der polnischen Patentschrift Nr. 113 110 Azofarbstoffe mit einer 4-Methyl-5-carbamoyl-1-methoxy-alkyl-2-hydroxy-6-pyridon-Kupplungskomponente und einem 1,3-Diamino-benzol-4,6-disulfonsäure-Rest, an dessen zweiten Aminogruppen eine 2-[3'-(Chlorvinylsulfonyl)-phenyl]-amino-4-chlor-s-triazin-6-yl-Gruppe gebunden ist, als Diazokomponente bekannt.

Mit der vorliegenden Erfindung wurden nunmehr neue, wertvolle Monoazoverbindungen gefunden, die der allgemeinen Formel (1)

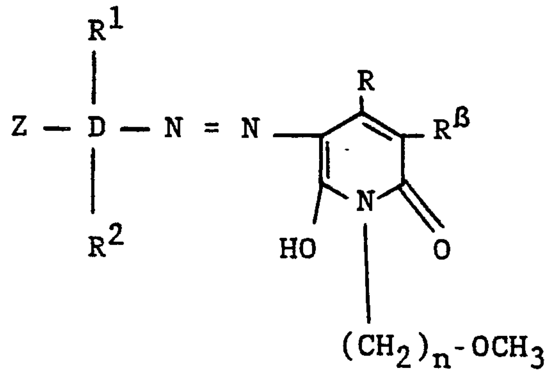

(1)

entsprechen, in welcher bedeuten:

| | |
|---|---|
| D | ist ein Benzolring; |
| $R^1$ und $R^2$ | sind, unabhängig voneinander, jedes Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Fluor und insbesondere Brom und Chlor, Carboxy oder Sulfo; |
| Z | ist eine faserreaktive Gruppierung der allgemeinen Formel (3) |

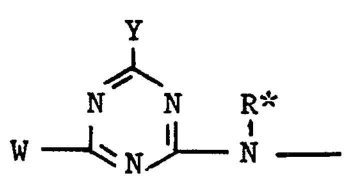

(3)

in welcher
$R^*$ Wasserstoff ist,
Y für ein Fluor- oder Chloratom steht und
W eine Aminogruppe der allgemeinen Formel (4)

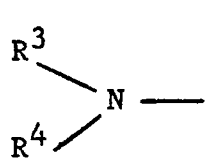

(4)

bedeutet, in welcher

$R^3$ ein Wasserstoffatom ist und

$R^4$ ein Phenylrest ist, der durch 1, 2 oder 3, bevorzugt 1 oder 2, Substituenten aus der Gruppe Sulfo, Carboxy, Chlor, Brom, Methyl, Ethyl, Methoxy und Ethoxy substituiert sein kann und durch eine Gruppe der Formel $-SO_2-X$ substituiert ist,

worin X die Vinylgruppe bedeutet oder eine Ethylgruppe ist, die in β-Stellung durch einen unter Bildung der Vinylgruppe alkalisch eliminierbaren Substituenten substituiert ist, wie beispielsweise eine β-Chlorethyl-, β-Acetyloxy-, β-Thiosulfatoethyl-, β-Phosphatoethyl- und insbesondere β-Sulfatoethyl-Gruppe:

R ist die Methylgruppe;

$R^\beta$ ist die Cyano- oder Carbamoylgruppe und

n bedeutet die Zahl 2 oder 3, bevorzugt 3.

Reste entsprechend der allgemeinen Formel (4) sind beispielsweise die Phenylaminogruppe, deren Phenylrest durch eine β-Sulfatoethylsulfonyl-, Vinylsulfonyl- oder β-Phosphatoethylsulfonyl-Gruppe substituiert ist und zusätzlich durch Methyl, Ethyl, Methoxy, Ethoxy, Chlor, Brom oder Sulfo substituiert sein kann.

Im vorstehenden und nachfolgenden Text bedeuten Sulfogruppen Gruppen entsprechend der allgemeinen Formel $-SO_3M$, Carboxygruppen Gruppen entsprechend der allgemeinen Formel -COOM , Sulfatogruppen Gruppen entsprechend der allgemeinen Formel $-OSO_3M$, Thiosulfatogruppen Gruppen entsprechend der allgemeinen Formel $-S-SO_3M$ und Phosphatogruppen Gruppen entsprechend der allgemeinen Formel $-OPO_3M_2$, in welchen

M für ein Wasserstoffatom oder ein Alkalimetall, wie Natrium, Kalium und Lithium, oder für ein salzbildendes 2- oder 3-wertiges Metall steht.

Von den erfindungsgemäßen Azoverbindungen der allgemeinen Formel (1) sind diejenigen hervorzuheben, in welchen $R^\beta$ die Carbamoylgruppe ist.

Die vorliegende Erfindung betrifft weiterhin Verfahren zur Herstellung der erfindungsgemäßen Verbindungen der allgemeinen Formel (1), die dadurch gekennzeichnet sind, daß man die Diazoniumverbindung einer Aminoverbindung der allgemeinen Formel (6)

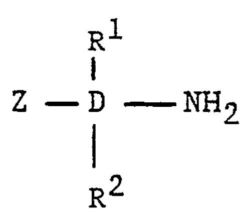

(6)

mit Z, D, $R^1$ und $R^2$ der obengenannten Bedeutung mit einer Verbindung der allgemeinen Formel (7)

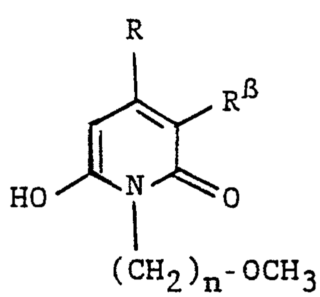

(7)

in welcher R, $R^\beta$ und n die obengenannten Bedeutungen haben, kuppelt, oder daß man eine Amino-Azoverbindung der allgemeinen Formel (8)

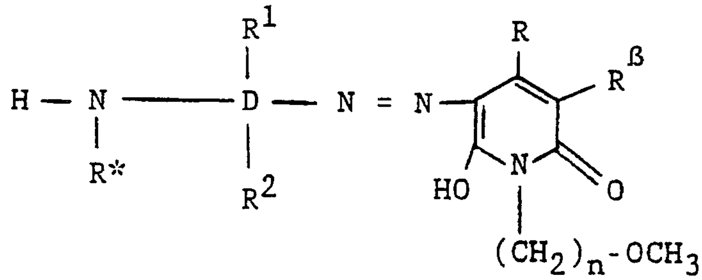

(8)

in welcher D, $R^1$, $R^2$, R, $R^*$, $R^\beta$ und n die obengenannten Bedeutungen haben, mit einer Verbindung der allgemeinen Formel (9)

$Z'-Y^1$ (9)

in welcher Z' ein von der Gruppierung $-N(R^*)-$ freier Rest Z der obengenannten Bedeutung ist und $Y^1$ für einen als Anion abspaltbaren Substituenten, wie insbesondere ein Halogenatom, wie Fluor- oder Chloratom, bedeutet, in äquivalenter Menge umsetzt.

Die Reaktionsbedingungen der erfindungsgemäßen Verfahrensweisen sind analog bekannten Verfahrensweisen der Diazotierung und Kupplung bzw. der Acylierung von Aminoverbindungen mit Acylierungsmitteln, wie beispielsweise solchen mit reaktiven Halogenatomen, wie Fluor- oder Chloratomen, wie ein oder zwei reaktive Halogenatome enthaltende Heterocyclen. So führt man beispielsweise die Diazotierung des Amins der allgemeinen Formel (6) zum Diazoniumsalz in wäßrigem Medium mittels einem üblichen Nitrosierungsagenz, wie salpetrige Säure, bei einer Temperatur zwischen -5° C und +20° C und einem pH-Wert von 2 oder kleiner als 2 durch; die Kupplungsreaktion kann beispielsweise in wäßrigem Medium bei einer Temperatur zwischen 5 und 25° C und einem pH-Wert zwischen 4 und 8, bevorzugt zwischen 5 und 7, ausgeführt werden.

Die erfindungsgemäße Umsetzung einer Amino-Azoverbindung der allgemeinen Formel (8) mit einem Acylierungsmittel der Formel (9) kann in wäßrigem oder in wäßrig-organischem Medium (wobei der organische Lösemittelanteil ein unter den Reaktionsbedingungen inertes, bevorzugt wasserlösliches Lösemittel ist, wie beispielsweise Aceton, Dimethylformamid und Dimethylsulfoxid) bei einem pH-Wert zwischen 1 und 8, bevorzugt zwischen 4 und 6, und bei einer Temperatur zwischen -20° C und +80° C, bevorzugt zwischen 30 und 60° C, ausgeführt werden.

Erfindungsgemäßen Verbindungen der allgemeinen Formel (1) können desweiteren erfindungsgemäß hergestellt werden, indem man - analog bekannten Verfahrensweisen der Umsetzung von Dihalogen-triazin-Verbindungen mit einer Aminoverbindung - eine Verbindung der allgemeinen Formel (12)

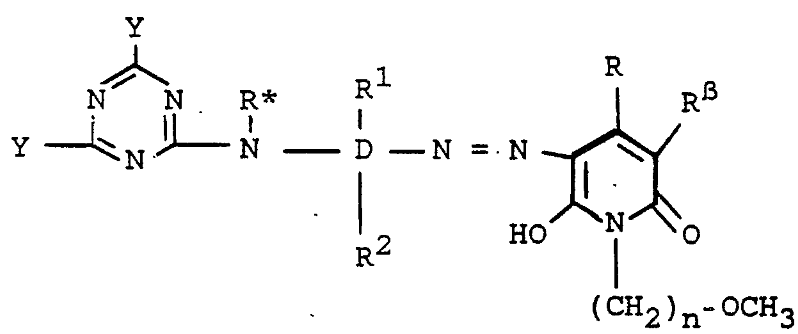

(12)

in welcher $R^*$, $R^1$, $R^2$, R, $R^\beta$, D und n sowie die beiden Y die obengenannten Bedeutungen haben, mit einer Aminoverbindung der allgemeinen Formel $HNR^3R^4$ mit $R^3$ und $R^4$ der oben genannten Bedeutung umsetzt, wie beispielsweise bei einer Temperatur zwischen 10 und 60° C, bevorzugt zwischen 20 und 50° C, und bei einem pH-Wert zwischen 2 und 8, bevorzugt zwischen 3 und 7, und in einem wäßrigen oder wäßrig-organischen Medium der oben beschriebenen Art.

Erfindungsgemäße Verbindungen der allgemeinen Formel (1), in welcher $R^\beta$ die Carbamoylgruppe bedeutet, können zudem erfindungsgemäß vorteilhaft in der Weise hergestellt werden, daß man die Cyangruppe in einer hier als Ausgangsverbindung dienenden Azoverbindung der Formel (1) mit $R^\beta$ gleich der Cyangruppe in 90 bis 98 %iger wäßriger Schwefelsäure bei einer Temperatur zwischen 70 und 90 °C

zur Carbamoylgruppe hydrolysiert.

Die Ausgangsverbindungen der allgemeinen Formel (8) lassen sich analog bekannten Verfahrensweisen leicht durch Kupplung des diazotierten Amins der allgemeinen Formel (10)

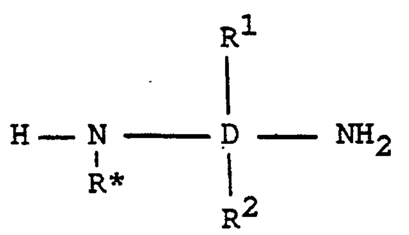

(10)

in welchen D, $R^1$, $R^2$ und $R^*$ die obengenannten Bedeutungen haben und die Aminogruppe -N($R^*$)- auch eine übliche Schutzgruppe, wie eine Acetylgruppe, enthalten kann, mit einer Kupplungskomponente der oben genannten und definierten allgemeinen Formel (7) unter Austritt der Carbamoylgruppe herstellen (die Schutzgruppe wird anschließend in üblicher Weise durch Hydrolyse abgespalten). Die Aminoverbindungen der allgemeinen Formel (10) sind allgemein bekannt und zahlreich in der Literatur beschrieben. Ebenso sind die den faserreaktiven Rest Z enthaltenden Ausgangs-Aminoverbindungen der allgemeinen Formel (6) bekannt oder können analog den bekannten Verbindungen durch Umsetzung der entsprechenden Diaminoverbindung der allgemeinen Formel (10) der obengenannten Bedeutung mit einer Verbindung der oben genannten und definierten allgemeinen Formel (9) in der dem Fachmann bekannten und geläufigen Weise hergestellt werden. Solche Verfahrensweisen sind allgemein in der Literatur oder in Patentveröffentlichungen beschrieben, wie beispielsweise in den Europäischen Patentanmeldungs-Veröffentlichungen Nrs. 0 078 009A und 0 212 264A oder gemäß den Beispielen der obengenannten deutschen Offenlegungsschrift 3 503 746.

Erfindungsgemäß als Ausgangverbindung dienende Kupplungskomponenten der allgemeinen Formel (7) sind aus der deutschen Offenlegungsschrift 3 239 436 bekannt oder lassen sich analog den dort angegebenen Verfahrensbedingungen herstellen.

Die Ausgangsverbindungen der allgemeinen Formel (12) selbst erhält man - analog den obigen Angaben der Umsetzung einer Verbindung (8) mit einer Verbindung (9) - durch Umsetzung einer Verbindung der allgemeinen Formel (8) mit Cyanurfluorid (2,4,6-Trifluor-1,3,5-triazin) oder Cyanurchlorid (2,4,6-Trichlor-1,3,5-triazin). Solche Verfahrensweisen und die hierfür angewendeten Reaktionsbedingungen sind zahlreich in der Literatur beschrieben (s. bspw. die oben erwähnten europäischen Patentanmeldungs-Veröffentlichungen Nrs. 0 078 009 A und 0 212 264 A). So kann die erfindungsgemäße Umsetzung bevorzugt bei einer Temperatur zwischen -10° C und +40° C, vorzugsweise zwischen 0° C und +30° C, sowie bei einem pH-Wert zwischen 1 und 7, bevorzugt zwischen 2 und 5, erfolgen, wobei die Umsetzung in wäßrigem oder wäßrig-organischem Medium der obengenannten Art ausgeführt werden kann.

Von den erfindungsgemäß eingesetzten Kupplungskomponenten der allgemeinen Formel (7) sind 4-Methyl-5-cyano-N-(β-methoxy-ethyl)-2-hydroxy-pyrid-6-on und insbesondere 4-Methyl-5-cyano-N-(γ-methoxy-propyl)-2-hydroxy-pyrid-6-on hervorzuheben.

Erfindungsgemäß verwendete Ausgangsverbindungen der allgemeinen Formel (6) sind beispielsweise: 2-Sulfo-5-[2'-fluor-4'-(3"-sulfo-phenyl)-amino-s-triazin-6-yl]-amino-anilin, 2-Sulfo-5-[2'-fluor-4'-(4"-β"-sulfatoethylsulfonyl)-amino-s-triazin-6-yl]-amino-anilin und 2-Sulfo-5-[2'-chlor-4'-(3"-β"-sulfatoethylsulfonyl)-amino-s-triazin-6-yl]-amino-anilin.

Die Abscheidung und Isolierung der erfindungsgemäß hergestellten Azoverbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1), nachstehend Verbindungen (1) genannt, haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindunge anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw.

Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert.

Hydroxygruppenhaltige Materialien sind solche natürlichen oder synthetischen Ursprungs, wie beispielsweise Cellulosefasermaterialien oder deren Regeneratprodukte von Polyvinylalkohole, Cellulosefasermaterialien sind vorzugsweise Baumwolle, aber auch andere Pflanzenfasern, wie Leinen, Hanf, Jute und Ramiefasern, regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6 Polyamid-6, Polyamid-11 und Polyamid-4.

Die Verbindungen (1) lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren. Solche Färbe-und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 40 und 105° C, gegebenenfalls bei Temperaturen bis zu 120° C unter Druck und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60° C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder einem anderen säurebindenden Mittel in der Druckpaste und durch anschließendes Dämpfen bei 100 bis 103° C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen, elektrolythaltigen Klotzflotte und anschließendem Verweilen dieses behandelten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200° C. Neben dem üblichen Wasserdampf von 101 bis 103° C kann auch überhitzter Dampf und Druckdampf von Temperaturen bis zu 160° C eingesetzt werden.

Die säurebindenden und die Fixierung der Verbindung (1) auf den Cellulsoefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumhydrogenphosphat, Dinatriumhydrogenphosphat, Natriumtrichloracetat, Wasserglas oder Trinatriumphosphat.

Durch die Behandlung der Verbindungen (1) mit den säurebindenden Mitteln, gegebenenfalls unter Wärmeeinwirkung, werden die erfindungsgemäßen Verbindung (Farbstoffe) chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den

gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40° C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98° C durchgeführt. Die Färbungen können aber auch bei Siedetemperatur oder bei Temperaturen bis zu 120° C (unter Druck) ausgeführt werden.

Die mit den Verbindungen (1) hergestellten Färbungen und Drucke zeichnen sich in der Regel durch klare, grünstichig über rotstichig gelbe bis gelbstichig orange Nuancen und hohe Farbstärken aus. Die Färbungen und Drucke besitzen, insbesondere auf Cellulosefasermaterialien, eine hohe Lichtechtheit und Schweißlichtechtheit sowie gute Naßechtheiten, wie beispielsweise gute Wasch-, Walk-, Wasser-, Seewasser-, Überfärbe-, Chlorbadewasser- und Schweißechtheiten, desweiteren eine gute Plissierechtheit, Bügelechtheit und Reibechtheit.

Ebenso von Bedeutung ist die erfindungsgemäße Verwendung der Verbindungen (1) auch für das faserreaktive Färben von Wolle. Insbesondere läßt sich auf filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); Journ. Soc. Dyers and Colorists 1972, 93-99, und 1975, 33-44) mit sehr guten Echtheitseigenschaften färben.

Das Verfahren des Färbens auf Wolle erfolgt hierbei in üblicher und bekannter Färbeweise, indem die faserreaktive Verbindung (1) bevorzugt zunächst aus saurem Färbebad mit einem pH-Wert von 3,5 bis 5,5 unter Kontrolle des pH-Wertes dem Ausziеßprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen der Verbindung (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100° C durchgeführt, jedoch können sie auch in geschlossenen Färbeapparaturen bei Temperaturen bis zu 106° C erfolgen. Da die Wasserlöslichkeit der Verbindungen (1) sehr gut ist, lassen sie sich auch mit Vorteil bei üblichen kontinuierlichen Färbeverfahren einsetzen. Die erfindungsgemäßen Verbindungen (1) besitzen eine sehr hohe Farbstärke und liefern auf den Fasermaterialien, insbesondere beim reaktiven Färben von Wolle, klare grünstichig über rotstichig gelbe bis gelbstichig orange Färbungen. Bei Anwendung von Färbetemperaturen von 100° C bis 106° C ist eine hohe Baderschöpfung festzustellen.

Bei den mit den Verbindungen (1) erhältlichen Färbungen kann auf eine ansonsten übliche ammoniakalische Nachbehandlung der gefärbten Ware verzichtet werden. Im Vergleich zu konstitutionell ähnlichen, bekannten Farbstoffen zeigen sie in überraschender Weise einen sehr guten Farbaufbau, wobei die brillante Nuance auch in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit den erfindungsgemäßen Verbindungen egal färben. Zur Verbesserung der Egalisierverhaltens kann gegebenenfalls ein übliches Egalisierhilfsmittel, wie beispielsweise N-Methyltaurin, zugesetzt werden.

Unter Verwendung der üblichen faseraffinen Färbereihilfsmittel ergeben die erfindungsgemäßen Verbindungen auch auf filzfrei oder filzarm ausgerüsteter Wolle egale Färbungen. Bei hellen bis mittleren Farbtiefen ist auch ohne ammoniakalische Nachbehandlung ein hohes Naßechtheitsniveau zu erzielen, wobei jedoch gegebenenfalls eine ammoniakalische Nachbehandlung bevorzugt werden kann. Neben der hohen Lichtechtheit dieser Wollfärbungen sind als gute Naßechtheitseigenschaften insbesondere die alkalische Schweißechtheit und die Waschechtheit bei 60° C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.
Die im sichtbaren Bereich angegebenen Absorptionsmaxima ($\lambda_{max}$-Werte) wurden aus wäßriger Lösung der Alkalimetallsalze bestimmt.

**Beispiel 1**

a) 23 Teile 3-Amino-acetanilid-4-sulfonsäure werden in 150 Teilen Wasser mit 5,9 Teilen Natriumcarbonat gelöst und nach Zugabe von 6,9 Teilen Natriumnitrit unter Rühren in eine Mischung von 71 Teilen einer 20%igen wäßrigen Schwefelsäure und 150 Teilen Eiswasser gegeben. Nach Beendigung der Diazotierungsreaktion zerstört man, überschüssiges Nitrit mittels etwas Amidosulfonsäure, stellt sodann mit Natriumcarbonat den pH-Wert auf 4 bis 4,5 und gibt eine Lösung von 22,2 Teilen 1-($\gamma$-Methoxy-propyl)-2-hydroxy-3-cyan-4-methyl-pyridin-6-on in 100 Teilen Wasser mit 6,3 Teilen Natriumcarbonat hinzu. Man erwärmt diesen Kupplungsansatz auf 40°C, versetzt ihn mit 92 Teilen einer 95%igen Schwefelsäure, rührt noch 3 Stunden bei 100°C weiter, kühlt ihn sodann auf 20°C ab und filtriert vom ausgefallenen Reaktionsprodukt aus. Man erhält die Monoazoverbindung der Formel

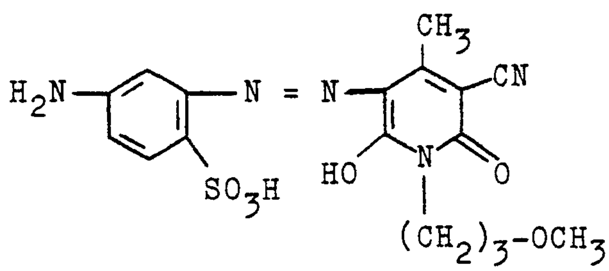

die gemäß den nachfolgenden Angaben weiterverarbeitet wird.
b) 42 Teile dieser unter a) hergestellten Amino-Azoverbindung werden in 183 Teilen einer 95%igen Schwefelsäure 4 Stunden bei 80°C gerührt; anschließend kühlt man auf 20°C ab und gibt den Ansatz sodann in eine Mischung von 50 Teilen Wasser und 590 Teilen Eis. Die gebildete Monoazoverbindung der Formel

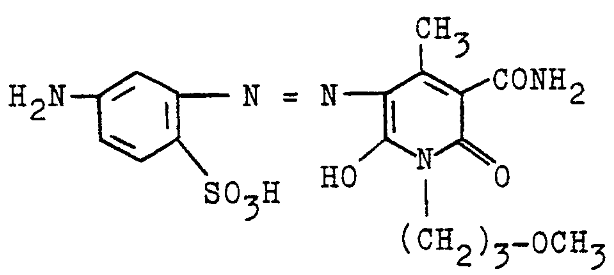

fällt man durch Aussalzen mit 150 Teilen Natriumchlorid aus.
c) 18,8 Teile Cyanurchlorid werden in einer Mischung aus 85 Teilen Eis und 40 Teilen Wasser verrührt. Man gibt eine Lösung des Natriumsalzes von 28,1 Teilen der Schwefelsäurehalbesterverbindung von 4-($\beta$-Hydroxyethylsulfonyl)-anilin in 100 Teilen Wasser hinzu und rührt diesen Reaktionsansatz noch eine Stunde bei 5 bis 10°C und einem pH-Wert von 3 nach.

In die erhaltene Suspension gibt man bei 40 bis 50°C unter Einhaltung eines pH-Wertes zwischen 4,5 und 5,5 mittels Natriumcarbonat eine Suspension von 44,5 Teilen der unter b) hergestellten Amino-Azoverbindung, rührt den Reaktionsansatz noch einige Zeit unter den angegebenen Reaktionsbedingungen nach, klärt ihn mittels Kieselgur und Filtration und fällt die gebildete erfindungsgemäße Monoazoverbindung durch Aussalzen mit 140 Teilen Natriumchlorid aus.

Man erhält nach Abfiltration und Trocknen das elektrolytsalzhaltige (vorwiegend natriumchloridhaltige) erfindungsgemäße Natriumsalz der Verbindung der Formel

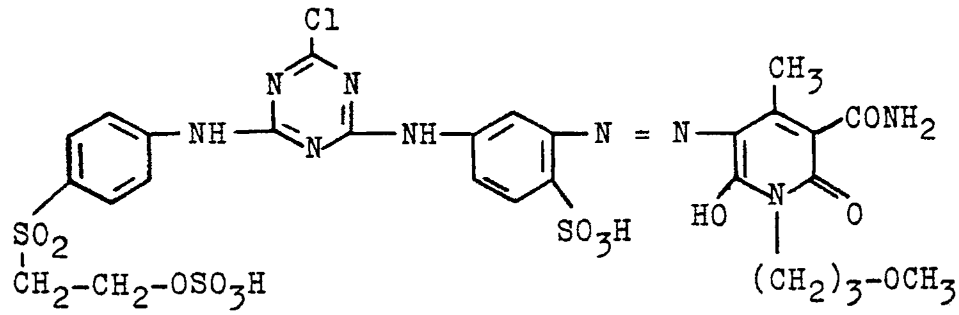

($\lambda_{max}$ = 422 nm).

Die erfindungsgemäße Azoverbindung besitzt sehr gute faserreaktive Farbstoffeigenschaften und färbt beispielsweise Baumwolle unter den üblichen Anwendungsbedingungen in brillanten gelben Tönen von hoher Farbstärke und guten Echtheitseigenschaften, von denen insbesondere die Chlorbadewasser- und Schweißlichtechtheiten hervorgehoben werden können.

**Beispiel 2**

a) 18,8 Teile Cyanur chlorid werden in einer Mischung aus 85 Teilen Eis und 40 Teilen Wasser verrührt. Man gibt eine neutrale Lösung von 28,1 Teilen 4-(β-Sulfatoethylsulfonyl)-anilin, 6 Teilen Natriumcarbonat und 100 Teilen Wasser hinzu und rührt diesen Reaktionsansatz eine Stunde bei einem pH-Wert von 3 und einer Temperatur von 5 und 10° C nach.

b) In die unter a) erhaltene Acylierungssuspension gibt man eine Lösung des Natriumsalzes von 31,2 Teilen 1,4-Diaminobenzol-2,5-disulfonsäure in 100 Teilen Wasser und rührt unter Einhaltung eines pH-Wertes von 4,5 bis 5,5 und bei einer Temperatur zwischen 20 und 40° C noch 2 Stunden nach.

c) Die unter b) erhaltene Lösung wird mit 6,9 Teilen Natriumnitrit und 200 Teilen Eis versetzt, und das aminogruppenhaltige sekundäure Kondensationsprodukt wird durch Zugabe von 74 Teilen einer 20%igen wäßrigen Schwefelsäure diazotiert. Anschließend wird der Ansatz noch eine Stunde bei 5 bis 10° C nachgerührt, überschüssige salpetrige Säure mittels Amidosulfonsäure zerstört, der Ansatz mit Natriumcarbonat auf einen pH-Wert von 4,0 bis 4,5 eingestellt und mit einer Lösung 22,2 Teilen 1-(γ-Methoxypropyl)-2-hydroxy-3-cyano-4-methyl-pyrid-6-on und 6,3 Teilen Natriumcarbonat in 100 Teilen Wasser versetzt. Man führt die Kupplungsreaktion bei einer Temperatur von etwa 20° C und einem pH-Wert von etwa 6 durch. Die Kupplung ist nach etwa einer Stunde beendet. Der Reaktionsansatz wird durch Zugabe von 1 Teil Kieselgur und anschließender Filtration geklärt und das Filtrat unter reduziertem Druck eingedampft oder sprühgetrocknet.

Man erhält ein oranges elektrolythaltiges Pulver des erfindungsgemäßen Natriumsalzes der Verbindung der Formel

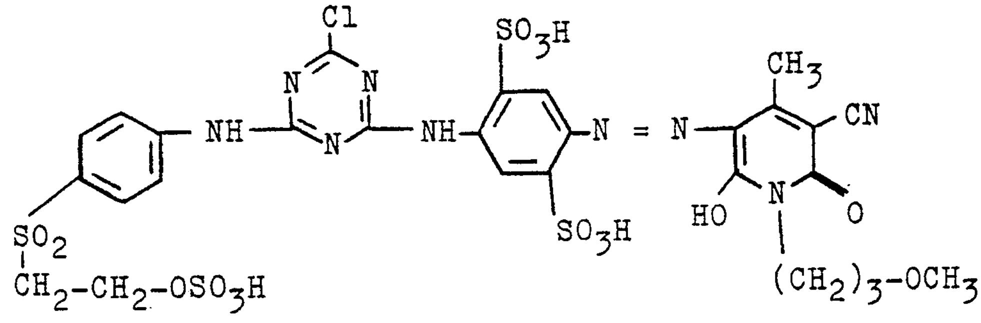

($\lambda_{max}$ = 445 nm).

Die erfindungsgemäße Azoverbindung besitzt sehr gute faserreaktive Farbstoffeigenschaften und färbt

beispielsweise Baumwolle unter den üblichen Anwendungsbedingungen in orangen Tönen von hoher Farbstärke und guten Echtheitseigenschaften.

**Beispiel 3**

96 Teile der erfindungsgemäßen Azoverbindung von Beispiel 2 werden in Form ihres Natriumsalzes in 485 Teile einer 95%igen wäßrigen Schwefelsäure eingerührt. Man erwärmt den Ansatz auf 80° C, rührt noch 2 Stunden bei dieser Temperatur nach, kühlt sodann das Reaktionsgemisch auf 20° C und gibt es in eine Mischung aus 100 Teilen Wasser und 1100 Teilen Eis, filtriert das ausgefallene Produkt ab, suspendiert es sodann in 200 Teilen Wasser und stellt durch Zugabe von Natriumcarbonat einen pH-Wert von 6 ein. Aus dieser Lösung wird die erfindungsgemäße Verbindung der Formel

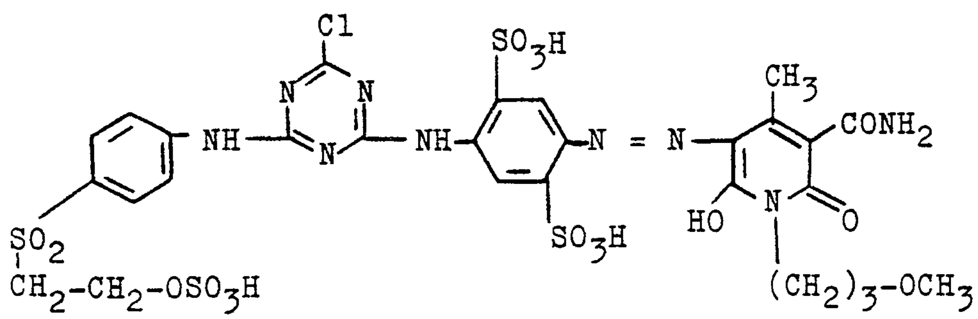

($\lambda_{max}$ = 425 nm)

in Form des Natriumsalzes als gelbes elektrolythaltiges Pulver durch Eindampfen unter reduziertem Druck, so beispielsweise durch Sprühtrocknung, isoliert. Die erfindungsgemäße Azoverbindung besitzt sehr gute faserreaktive Farbstoffeigenschaften und färbt beispielsweise Baumwolle unter den üblichen Anwendungsbedingungen in brillanten gelben Tönen von hoher Farbstärke und guten Echtheitseigenschaften.

**Beispiele 4 bis 11**

In den nachfolgenden Tabellenbeispielen sind weitere erfindungsgemäße Monoazoverbindungen entsprechend einer allgemeinen Formel (C)

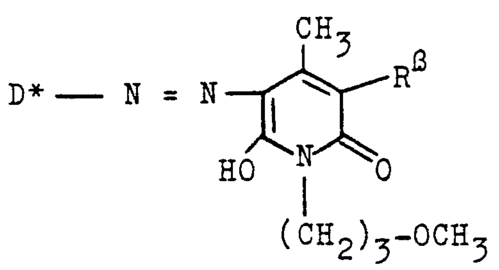

(C)

mit Hilfe der Formelreste beschrieben. Sie lassen sich in erfindungsgemäßer Weise, wie beispielsweise nach einer in den obigen Ausführungsbeispielen beschriebenen Verfahrensweise, herstellen. Sie zeigen sehr gute Farbstoffeigenschaften und liefern auf den in der Beschreibung genannten Materialien, wie insbesondere Cellulosefasermaterialien, beispielsweise Baumwolle, farbstarke Färbungen und Drucke mit guten Echtheitseigenschaften mit dem in dem jeweiligen Tabellenbeispiel angegebenen Farbton.

| | Monoazoverbindung (C) | | Farbton ($\lambda_{max}$ = ...nm) |
|---|---|---|---|
| Bsp. | Rest D*- | Rest $R^{\beta}$ | |
| 4 | 2-Sulfo-5-{2'-[3"-(β-Sulfato-ethylsulfonyl)-phenylamino]-4'-chlor-1',3',5'-triazin-6'-yl}-amino-phenyl | Carbamoyl | grünstichig gelb (421) |
| 5 | 2-Sulfo-5-{2'-[4"-(β-Sulfato-ethylsulfonyl)-phenylamino]-4'-fluor-1',3',5'-triazin-6'-yl}-amino-phenyl | Carbamoyl | grünstichig gelb (421) |
| 6 | 2-Sulfo-5-{2'-[3"-(β-Sulfato-ethylsulfonyl)-phenylamino]-4'-fluor-1',3',5'-triazin-6'-yl}-amino-phenyl | Carbamoyl | grünstichig gelb (420) |
| 7 | 4-{2'-[3"-(β-Sulfatoethyl-sulfonyl)-phenylamino]-4'-chlor-1',3',5'-triazin-6'-yl}-2,5-disulfo-phenyl | Cyano | gelbstichig orange (445) |
| 8 | 4-{2'-[4"-(β-Sulfatoethyl-sulfonyl)-phenylamino]-4'-chlor-1',3',5'-triazin-6'-yl}-2,4-disulfo-phenyl | Cyano | gelb (431) |
| 9 | 4-{2'-[3"-(β-Sulfatoethyl-sulfonyl)phenylamino]-4'-chlor-1',3',5'-triazin-6'-yl}-2,4-disulfo-phenyl | Cyano | gelb (432) |
| 10 | 4-{2'-[3"-(β-Sulfatoethyl-sulfonyl)-phenylamino]-4'-chlor-1',3',5'-triazin-6'-yl}-2,4-disulfo-phenyl | Carbamoyl | grünstichig gelb (419) |
| 11 | 4-{2'-[3"-(β-Sulfatoethyl-sulfonyl)-phenylamino]-4'-fluor-1',3',5'-triazin-6'-yl}-2,5-disulfo-phenyl | Carbamoyl | rotstichig gelb (431) |

## Patentansprüche

### Patentansprüche für folgende Vertragsstaaten : DE, GB, FR, IT, CH/LI, BE

**1.** Monoazoverbindung entsprechend der allgemeinen Formel (1)

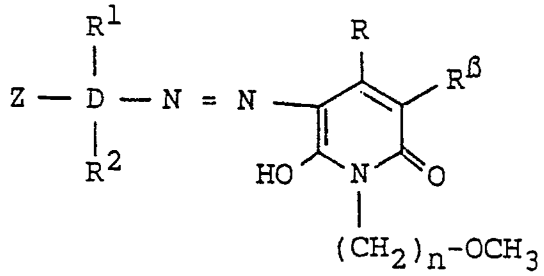

(1)

in welcher bedeuten:

- D ist ein Benzolring;
- $R^1$ und $R^2$ sind, unabhängig voneinander, jedes Wasserstoff, Alkyl von 1 bis 4 C-Atomen, Alkoxy von 1 bis 4 C-Atomen, Halogen, Carboxy oder Sulfo;
- Z ist ein Rest der allgemeinen Formel (3)

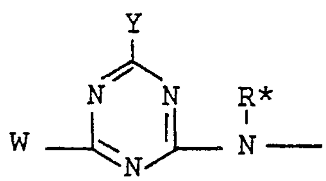

(3)

in welcher

- $R^*$ ein Wasserstoffatom ist,
- Y für ein Fluor- oder Chloratom steht und
- W eine Aminogruppe der allgemeinen Formel (4)

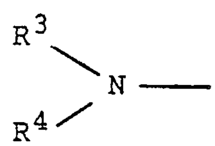

(4)

bedeutet, in welcher
$R^3$ ein Wasserstoffatom ist und
$R^4$ ein Phenylrest ist, der durch 1, 2 oder 3 Substituenten aus der Gruppe Sulfo, Carboxy, Chlor, Brom, Methyl, Ethyl, Methoxy und Ethoxy substituiert sein kann und durch eine Gruppe der Formel $-SO_2-X$ substituiert ist, wobei X die Vinylgruppe bedeutet oder eine Ethylgruppe ist, die in $\beta$-Stellung durch einen unter Bildung der Vinylgruppe alkalisch eliminierbaren Substituenten substituiert ist;

- R ist die Methylgruppe;
- $R^\beta$ ist die Cyano- oder Carbamoylgruppe und
- n bedeutet die Zahl 2 oder 3.

**2.** Verbindung nach Anspruch 1, dadurch gekennzeichnet, daß X die Vinylgruppe oder die $\beta$-Thiosulfatoethyl-, $\beta$-Phosphatoethyl, $\beta$-Chlorethyl- oder $\beta$-Sulfatoethyl-Gruppe ist.

**3.** Verbindung nach Anspruch 1, dadurch gekennzeichnet, daß X die $\beta$-Sulfatoethyl-Gruppe bedeutet.

4. Verfahren zur Herstellung einer Verbindung der in Anspruch 1 genannten und definierten allgemeinen Formel (1), dadurch gekennzeichnet, daß man die Diazoniumverbindung einer Aminoverbindung der allgemeinen Formel (6)

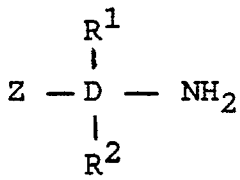

(6)

in welcher Z, D, $R^1$ und $R^2$ die in Anspruch 1 genannten Bedeutungen haben, mit einer Verbindung der allgemeinen Formel (7)

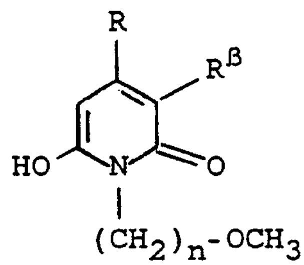

(7)

in welcher R, $R^{\beta}$ und n die in Anspruch 1 genannten Bedeutungen haben, kuppelt, oder daß man eine Amino-Azoverbindung der allgemeinen Formel (8)

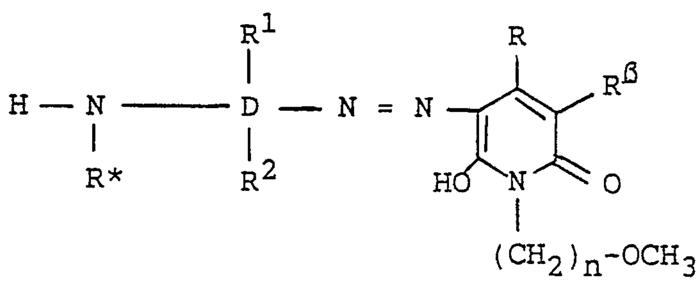

(8)

in welcher D, $R^1$, $R^2$, R, $R^{\beta}$, $R^*$ und n die in Anspruch 1 genannten Bedeutungen haben, mit einer Verbindung der allgemeinen Formel (9)

Z' - Y' (9)

in welcher Z' ein von der Gruppierung -N($R^*$)- freier Rest Z der obengenannten Bedeutung ist und $Y^1$ für einen als Anion abspaltbaren Substituenten, bevorzugt ein Halogenatom, steht, in äquivalenter Menge umsetzt oder daß man eine Verbindung der allgemeinen Formel (12)

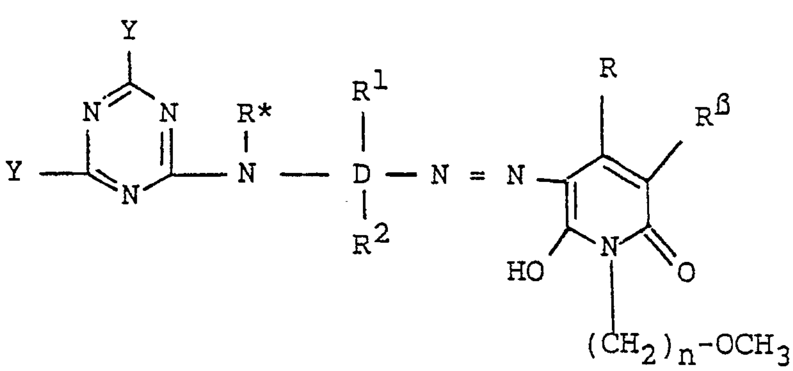

(12)

in welcher $R^*$, $R^1$, $R^2$, R, $R^\beta$, D und n sowie die beiden Y die in Anspruch 1 genannten Bedeutungen haben, mit einer Aminoverbindung der allgemeinen Formel $HNR^3R^4$ mit $R^3$ und $R^4$ der obengenannten Bedeutung umsetzt.

**5.** Verfahren zur Herstellung einer Azoverbindung gemäß der in Anspruch 1 genannten und definierten allgemeinen Formel (1), in welcher jedoch $R^\beta$ für die Carbamoylgruppe steht, dadurch gekennzeichnet, daß man eine Azoverbindung entsprechend der in Anspruch 1 genannten und definierten allgemeinen Formel (1), in welcher $R^\beta$ jedoch für die Cyangruppe steht, mit 90 bis 98 %iger wäßriger Schwefelsäure bei einer Temperatur zwischen 70 und 90 °C umsetzt.

**6.** Verwendung einer Verbindung gemäß der in Anspruch 1 genannten und definierten allgemeinen Formel (1) oder einer nach dem Anspruch 5 hergestellten Monoazoverbindung der Formel (1) als Farbstoff.

**7.** Verwendung nach Anspruch 6 zum Färben oder Bedrucken von hydroxy- und/oder carbonamidgruppenhaltigem Material, vorzugsweise Fasermaterial.

**8.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme oder mittels einer säurebindenden Verbindung fixiert, dadurch gekennzeichnet, daß man als Farbstoff eine Verbindung entsprechend der gemäß Anspruch 1 genannten und definierten allgemeinen Formel (1) einsetzt.

**Patentansprüche für folgenden Vertragsstaat : ES**

**1.** Verfahren zur Herstellung einer Monoazoverbindung entsprechend der allgemeinen Formel (1)

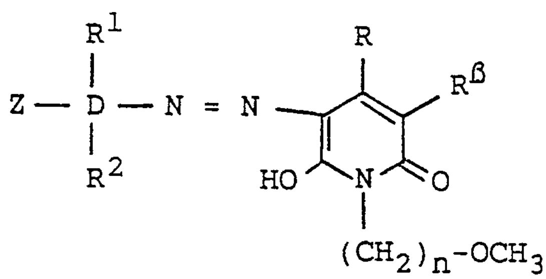

(1)

in welcher bedeuten:

D ist ein Benzolring;

$R^1$ und $R^2$ sind, unabhängig voneinander, jedes Wasserstoff, Alkyl von 1 bis 4 C-Atomen, Alkoxy von 1 bis 4 C-Atomen, Halogen, Carboxy oder Sulfo;

Z ist ein Rest der allgemeinen Formel (3)

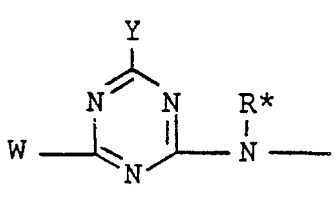

(3)

in welcher

$R^*$ ein Wasserstoffatom ist,

Y für ein Fluor- oder Chloratom steht und

W eine Aminogruppe der allgemeinen Formel (4)

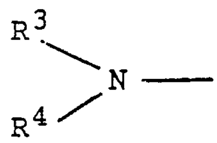

(4)

bedeutet, in welcher
$R^3$ ein Wasserstoffatom ist und
$R^4$ ein Phenylrest ist, der durch 1, 2 oder 3 Substituenten aus der Gruppe Sulfo, Carboxy, Chlor, Brom, Methyl, Ethyl, Methoxy und Ethoxy substituiert sein kann und durch eine Gruppe der Formel $-SO_2-X$ substituiert ist, wobei X die Vinylgruppe bedeutet oder eine Ethylgruppe ist, die in $\beta$-Stellung durch einen unter Bildung der Vinylgruppe alkalisch eliminierbaren Substituenten substituiert ist;

R ist die Methylgruppe;
$R^{\beta}$ ist die Cyano- oder Carbamoylgruppe und
n bedeutet die Zahl 2 oder 3,

dadurch gekennzeichnet, daß man die Diazoniumverbindung einer Aminoverbindung der allgemeinen Formel (6)

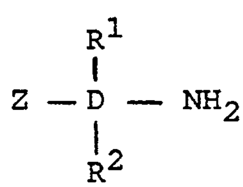

(6)

in welcher Z, D, $R^1$ und $R^2$ die obengenannten Bedeutungen haben, mit einer Verbindung der allgemeinen Formel (7)

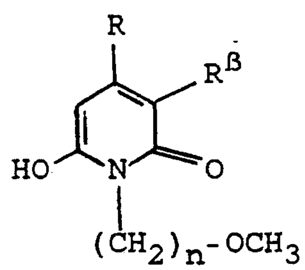

(7)

in welcher R, $R^{\beta}$ und n die obengenannten Bedeutungen haben, kuppelt,
oder daß man eine Amino-Azoverbindung der allgemeinen Formel (8)

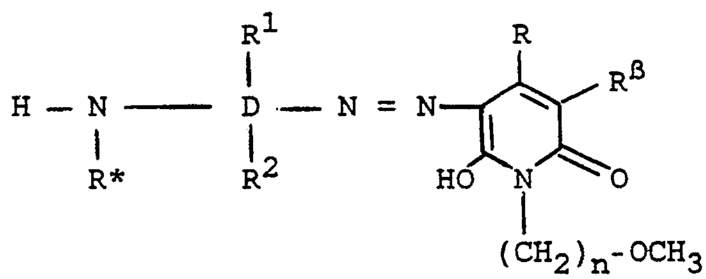

(8)

in welcher D, $R^1$, $R^2$, R, $R^{\beta}$, $R^*$ und n die obengenannten Bedeutungen haben, mit einer Verbindung der allgemeinen Formel (9)

$Z' - Y^1$ (9)

in welcher Z' ein von der Gruppierung $-N(R^*)-$ freier Rest Z der obengenannten Bedeutung ist und $Y^1$

für einen als Anion abspaltbaren Substituenten, bevorzugt ein Halogenatom, steht, in äquivalenter Menge umsetzt oder daß man eine Verbindung der allgemeinen Formel (12)

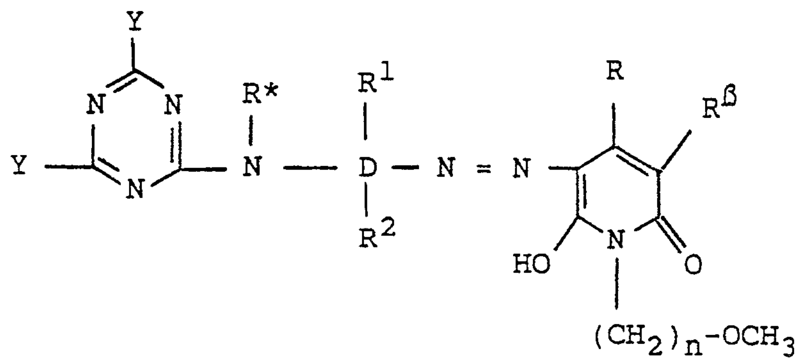

(12)

in welcher $R^*$, $R^1$, $R^2$, R, $R^\beta$, D und n sowie die beiden Y die obengenannten Bedeutungen haben, mit einer Aminoverbindung der allgemeinen Formel $HNR^3R^4$ mit $R^3$ und $R^4$ der obengenannten Bedeutung umsetzt,
oder daß man zur Herstellung einer Azoverbindung der Formel (1) mit $R^\beta$ gleich der Carbamoylgruppe eine Azoverbindung entsprechend der obengenannten und definierten allgemeinen Formel (1), in welcher $R^\beta$ jedoch für die Cyangruppe steht, mit 90 bis 98 %iger wäßriger Schwefelsäure bei einer Temperatur zwischen 70 und 90°C umsetzt.

2. Verfahren nach Anspruch 1, dadurch gekennzeichnet, daß X die Vinylgruppe oder die $\beta$-Thiosulfatoethyl-, $\beta$-Phosphatoethyl-, $\beta$-Chlorethyl- oder $\beta$-Sulfatoethyl-Gruppe ist.

3. Verfahren nach Anspruch 1, dadurch gekennzeichnet, daß X die $\beta$-Sulfatoethyl-Gruppe bedeutet.

4. Verwendung einer Verbindung gemäß der in Anspruch 1 genannten und definierten allgemeinen Formel (1) oder einer gemäß Anspruch 1 hergestellten Monoazoverbindung der Formel (1) als Farbstoff.

5. Verwendung nach Anspruch 4 zum Färben oder Bedrucken von hydroxy- und/oder carbonamidgruppenhaltigem Material, vorzugsweise Fasermaterial.

6. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme oder mittels einer säurebindenden Verbindung fixiert, dadurch gekennzeichnet, daß man als Farbstoff eine Verbindung entsprechend der in Anspruch 1 genannten und definierten allgemeinen Formel (1) oder einer gemäß Anspruch 1 hergestellten Verbindung der Formel (1) einsetzt.

**Claims**
**Claims for the following Contracting States : DE, GB, FR, IT, CH/LI, BE**

1. A monoazo compound conforming to the formula (1)

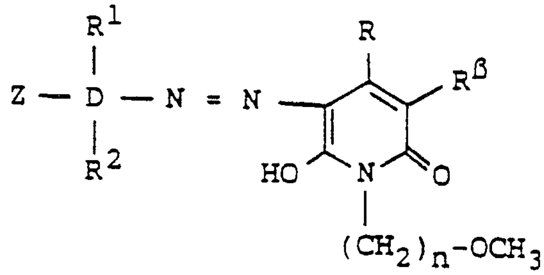

(1)

where the symbols have the following meanings:

D is a benzene ring,
$R^1$ and $R^2$ are each independently of the other hydrogen, alkyl of 1 to 4 carbon atoms, alkoxy of 1 to 4 carbon atoms, halogen, carboxyl or sulfo;
Z is a radical of the formula (3)

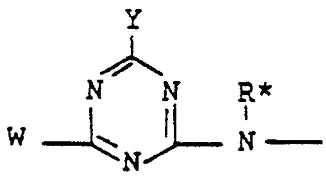

(3)

in which
$R^*$ is a hydrogen atom,
Y is a fluorine or chlorine atom and
W is an amino group of the formula (4)

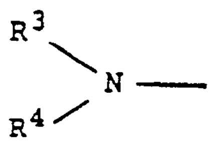

(4)

in which
$R^3$ is a hydrogen atom and
$R^4$ is a phenyl radical which may be substituted by 1, 2 or 3 substituents from the group consisting of sulfo, carboxyl, chlorine, bromine, methyl, ethyl, methoxy and ethoxy and is substituted by a group of the formula $-SO_2-X$, where X is vinyl or an ethyl group which is substituted in the $\beta$-position by a substituent which can be eliminated under alkaline conditions with the formation of a vinyl group;
R is a methyl group;
$R^\beta$ is cyano or carbamoyl and
n is 2 or 3.

2. A compound as claimed in claim 1, wherein X is vinyl, $\beta$-thiosulfatoethyl, $\beta$-phosphatoethyl, $\beta$-chloroethyl or $\beta$-sulfatoethyl.

3. A compound as claimed in claim 1, wherein X is $\beta$-sulfatoethyl.

4. A process for preparing a compound of the general formula (1) mentioned and defined in claim 1, which comprises coupling the diazonium compound of an amino compound of the general formula (6)

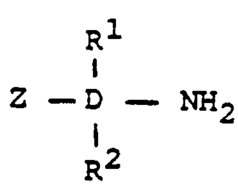

(6),

where Z, D, $R^1$ and $R^2$ have the meanings mentioned in claim 1, with a compound of the general formula (7)

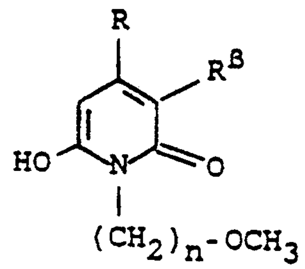

(7),

where R, $R^{\beta}$ and n have the meanings mentioned in claim 1 or reacting an amino-azo compound of the general formula (8)

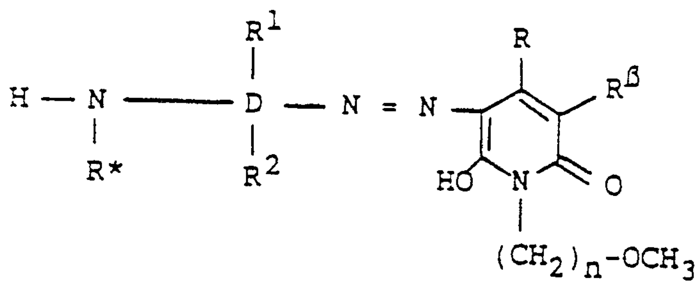

(8)

where D, $R^1$, $R^2$, R, $R^{\beta}$, R* and n have the meanings mentioned in claim 1, with a compound of the general formula (9)

$Z' - Y^1$ (9)

where Z' is a radical Z of the abovementioned meaning which is free of the grouping -N(R*)- and $Y^1$ is a substituent detachable as an anion, preferably a halogen atom, in an equivalent amount, or reacting a compound of the general formula (12)

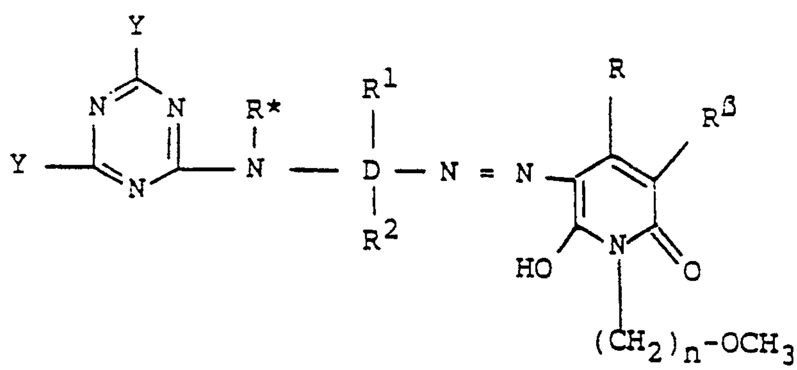

(12)

where R*, R', $R^2$, R, $R^{\beta}$, D and n and the two Ys have the meanings mentioned in claim 1, with an amino compound of the general formula $HNR^3R^4$ where $R^3$ and $R^4$ have the abovementioned meanings.

5. A process for preparing an azo compound of the general formula (1) mentioned and defined in claim 1 where, however, $R^{\beta}$ is carbamoyl, which comprises reacting an azo compound conforming to the general formula (1) mentioned and defined in claim 1 where, however, $R^{\beta}$ is cyano with 90 to 98% strength aqueous sulfuric acid at a temperature between 70 and 90 °C.

6. Use of a compound of the general formula (1) mentioned and defined in claim 1 or of a monoazo compound of the formula (1) prepared as claimed in claim 5, as a dye.

7. The use as claimed in claim 6 for dyeing or printing hydroxyl- and/or carboxamido-containing material,

preferably fiber material.

**8.** A process for dyeing (including printing) hydroxyl- and/or carboxamido-containing material, in particular fiber material, where a dye is applied to the material and fixed by means of heat or by means of an acid-binding compound, which comprises using as the dye a compound conforming to the general formula (1) mentioned and defined in claim 1.

**Claims for the following Contracting State : ES**

**1.** A process for preparing a monoazo compound conforming to the formula (1)

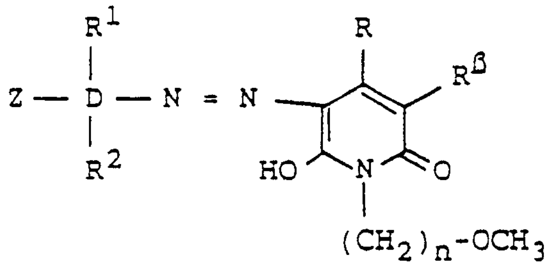

(1)

where the symbols have the following meanings:

D is a benzene ring,

$R^1$ and $R^2$ are each independently of the other hydrogen, alkyl of 1 to 4 carbon atoms, alkoxy of 1 to 4 carbon atoms, halogen, carboxyl or sulfo;

Z is a radical of the formula (3)

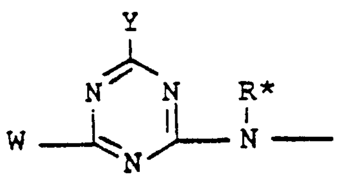

(3)

in which

R* is a hydrogen atom,

Y is a fluorine or chlorine atom and

W is an amino group of the formula (4)

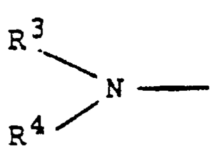

(4)

in which

$R^3$ is a hydrogen atom and

$R^4$ is a phenyl radical which may be substituted by 1, 2 or 3 substituents from the group consisting of sulfo, carboxyl, chlorine, bromine, methyl, ethyl, methoxy and ethoxy and is substituted by a group of the formula $-SO_2-X$, where X is vinyl or an ethyl group which is substituted in the $\beta$-position by a substituent which can be eliminated under alkaline conditions with the formation of a vinyl group;

R is a methyl group;

$R^\beta$ is cyano or carbamoyl and

n is 2 or 3,

which comprises coupling the diazonium compound of an amino compound of the general formula (6)

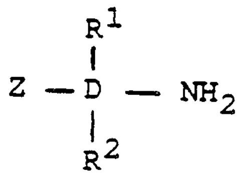

(6)

where Z, D, $R^1$ and $R^2$ have the abovementioned meanings, with a compound of the general formula (7)

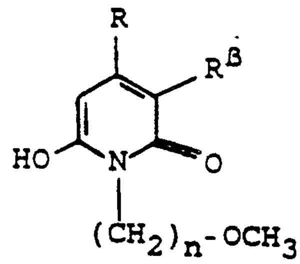

(7)

where R, $R^\beta$ and n have the abovementioned meanings, or reacting an amino-azo compound of the general formula (8)

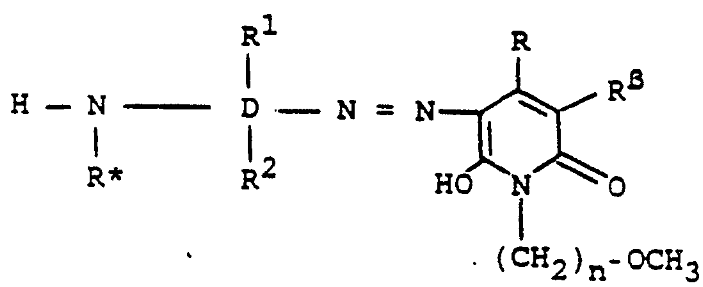

(8)

where D, $R^1$, $R^2$, R, $R^\beta$, $R^*$ and n have the abovementioned meanings, with a compound of the general formula (9)

Z' - $Y^1$ (9)

where Z' is a radical Z of the abovementioned meaning which is free of the grouping -N($R^*$)- and $Y^1$ is a substituent detachable as an anion, preferably a halogen atom, in an equivalent amount, or reacting a compound of the general formula (12)

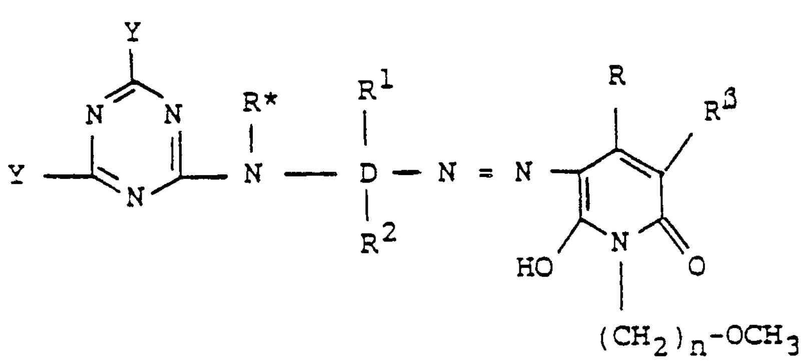

(12)

where $R^*$, $R^1$, $R^2$, R, $R^\beta$, D and n and the two Ys have the abovementioned meanings, with an amino compound of the general formula $HNR^3R^4$ where $R^3$ and $R^4$ have the abovementioned meanings, or preparing an azo compound of the formula (1) where $R^\beta$ is carbomoyl, by reacting an azo compound of the general formula (1) mentioned and defined above, where, however, $R^\beta$ is cyano with 90 to 98%

strength aqueous sulfuric acid at a temperature between 70 and 90 ° C.

2. The process as claimed in claim 1, where X is vinyl, β-thiosulfatoethyl, β-phosphatoethyl, β-chloroethyl or β-sulfatoethyl.

3. The process as claimed in claim 1, wherein X is β-sulfatoethyl.

4. Use of a compound of the general formula (1) mentioned and defined in claim 1 or of a monoazo compound of the formula (1) prepared as claimed in claim 1, as a dye.

5. The use as claimed in claim 4 for dyeing or printing hydroxyl- and/or carboxamido- containing material, preferably fiber material.

6. A process for dyeing (including printing) hydroxyl- and/or carboxamido-containing material, in particular fiber material, where a dye is applied to the material and fixed by means of heat or by means of an acid-binding compound, which comprises using as the dye a compound conforming to the general formula (1) mentioned and defined in claim 1 or a compound of the formula (1) prepared as claimed in claim 1.

**Revendications**
**Revendications pour les Etats contractants suivants : DE, GB, FR, IT, CH, LI, BE**

1. Composé monoazoïque répondant à la formule générale (1)

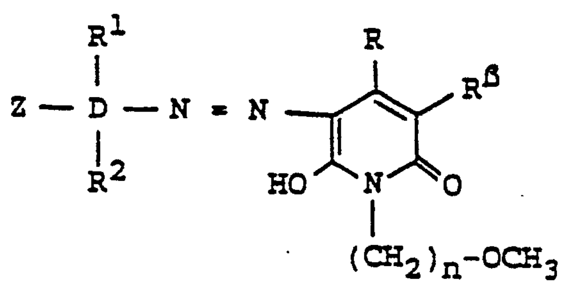

(1)

dans laquelle :

| | |
|---|---|
| D | représente un noyau benzénique; |
| $R^1$ et $R^2$ | représentent chacun, indépendamment l'un de l'autre, un atome d'hydrogène, un groupe alkyle ayant 1 à 4 atomes de carbone, alcoxy ayant 1 à 4 atomes de carbone, halogéno, carboxy ou sulfo; |
| Z | représente un reste de formule générale (3) |

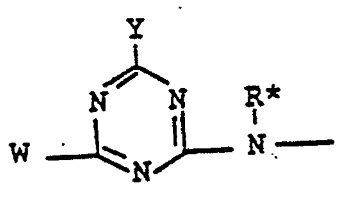

(3)

dans laquelle :

| | |
|---|---|
| $R^*$ | représente un atome d'hydrogène, |
| Y | représente un atome de fluor ou de chlore, et |
| W | représente un groupe amino de formule générale (4) |

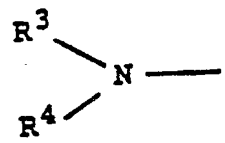

(4)

dans laquelle
$R^3$ représente un atome d'hydrogène, et
$R^4$ représente un reste phenyle,qui peut être substitué par 1,2 ou 3 substituants choisis parmi un groupe sulfo, carboxy, chloro, bromo, méthyle, éthyle, méthoxy et éthoxy, et qui est substitué par un groupe de formule $-SO_2-X$, dans laquelle X représente le groupe vinyle ou un groupe éthyle qui est substitué en position $\beta$ par un substituant, éliminable en milieu alcalin avec formation du groupe vinyle

R représente le groupe méthyle;
$R^\beta$ représente le groupe cyano ou carbamoyle et,
n est un nombre valant 2 ou 3.

2. Composé selon la revendication 1, caractérisé en ce que X représente le groupe vinyle ou le groupe $\beta$-thiosulfatoéthyle, $\beta$-phosphatoéthyle, $\beta$-chloréthyle ou $\beta$- sulfatoéthyle.

3. Composé selon la revendication 1, caractérisé en ce que X représente le groupe $\beta$-sulfatoéthyle.

4. Procédé pour préparer un composé de formule générale(1), citée et définie à la revendication 1, procédé caractérisé en ce qu'on copule le composé de diazonium dérivant d'une amine de formule générale (6)

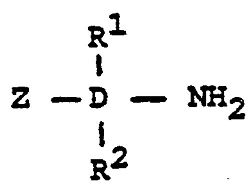

(6)

(dans laquelle Z, D, $R^1$ et $R^2$ ont les sens indiqués à la revendication 1) avec un composé de formule générale (7)

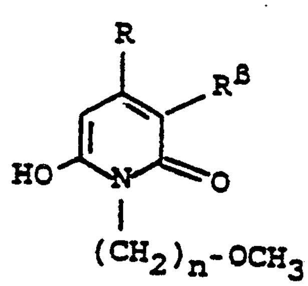

(7)

(dans laquelle R, $R^\beta$ et n ont les sens indiqués à la revendication 1), ou bien en ce qu'on fait réagir en une quantité équivalente un composé aminoazoïque de formule générale (8)

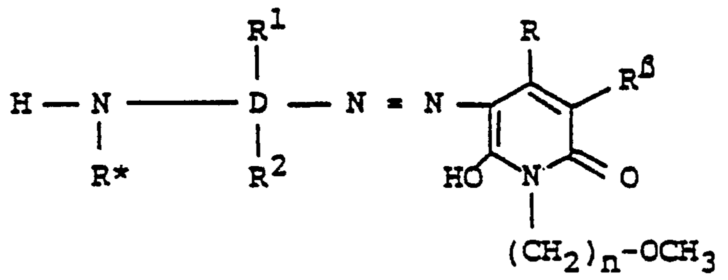

(8)

(dans laquelle D, $R^1$, $R^2$, R, $R^\beta$ et n ont les sens indiqués à la revendication 1) avec un composé de formule générale (9)

$Z'-Y^1$ (9)

(dans laquelle Z' représente un reste ayant le sens précité et qui est dépourvu du groupement $-N(R^*)-$ , et $Y^1$ représente un substituant pouvant être séparé sous forme d'un anion, de préférence un atome d'halogène), ou en ce qu'on fait réagir un composé de formule générale (12)

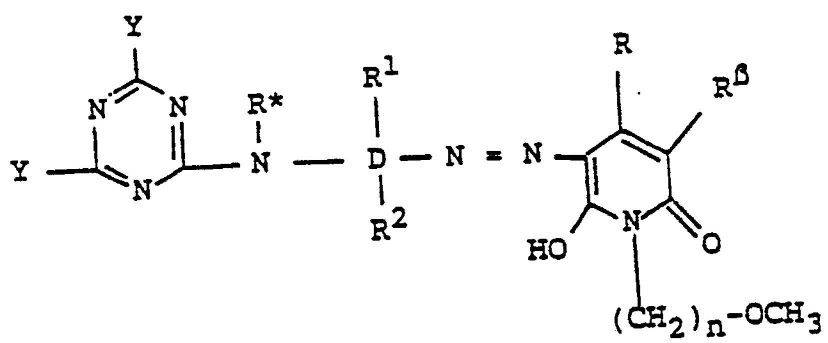

(12)

dans laquelle $R^*$, $R^1$, $R^2$, R, $R^\beta$, D et n ainsi que les deux Y ont les sens indiqués à la revendication 1) avec une amine de formule générale $HNR^3R^4$ avec $R^3$ et $R^4$ ont les sens précités.

**5.** Procédé pour préparer un composé azoïque répondant à la formule générale (1), citée et définie à la revendication 1, mais dans laquelle $R^\beta$ représente le groupe carbamoyle,procédé caractérisé en ce qu'on fait réagir un composé azoïque répondant à la formule générale (1), (citée et définie à la revendication 1 et dans laquelle $R^\beta$ représente cependant le groupe cyano) avec de l'acide sulfurique aqueux à 90 jusqu'à 98 %, à une température comprise entre 70 et 90 °C.

**6.** Utilisation, comme colorant, d'un composé répondant à la formule générale (1), citée et définie à la revendication 1, ou d'un composé monoazoïque de formule (1), préparé selon la revendication 5.

**7.** Utilisation selon la revendication 6 pour teindre ou imprimer une matière contenant des groupes hydroxy et/ou carboxamide, avantageusement une matière fibreuse.

**8.** Procédé pour teindre (ce qui comprend l'impression) une matière contenant des groupes hydroxy et/ou des groupes carboxamide, en particulier de la matière fibreuse, selon lequel on applique un colorant sur la matière et on l'y fixe à l'aide de la chaleur ou à l'aide d'un composé à rôle de fixation des acides, procédé caractérisé en ce qu'on utilise comme colorant un composé répondant à la formule générale (1) citée et définie à la revendication 1.

**Revendications pour l'Etat contractant suivants : ES**

**1.** Procédé pour préparer un composé monoazoïque répondant à la formule générale (1)

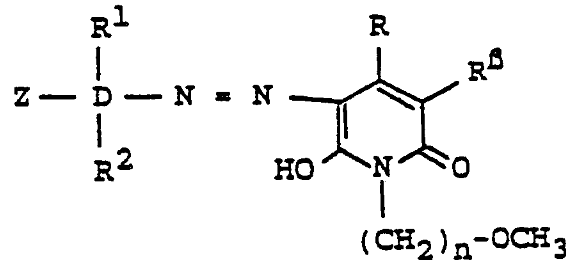

(1)

dans laquelle :

D représente un noyau benzénique,

$R^1$ et $R^2$ représentent chacun, indépendamment l'un de l'autre, un atome d'hydrogène, un groupe alkyle ayant 1 à 4 atomes de carbone, alcoxy ayant 1 à 4 atomes de carbone, halogéno, carboxy ou sulfo,

Z représente un reste de formule générale (3)

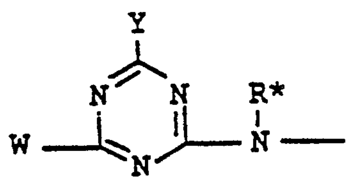

(3)

dans laquelle :

R* représente un atome d'hydrogène

Y représente un atome de fluor ou de chlore et

W représente un groupe amino de formule générale (4)

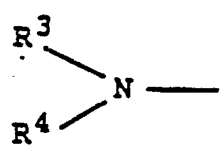

(4)

dans laquelle :

$R^3$ représente un atome d'hydrogène et,

$R^4$ représente un reste phenyle, qui peut être substitué par 1, 2 ou 3 substituants choisis parmi un groupe sulfo, carboxy, chloro, bromo, méthyle, éthyle, méthoxy ou éthoxy, et qui est substitué par un groupe de formule $-SO_2-X$ , dans lequel X représente le groupe vinyle ou un groupe éthyle qui est substitué en position $\beta$ par un substituant éliminable par voie alcaline avec formation du groupe vinyle;

R représente le groupe méthyle;

$R^\beta$ représente le groupe cyano ou carbamoyle, et n est un nombre valant 2 ou 3 , procédé caractérisé en ce qu'on copule le composé de diazonium dérivant d'une amine de formule générale (6)

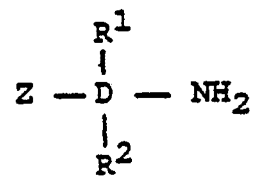

(6)

(dans laquelle Z, D, $R^1$ et $R^2$ ont les sens indiqués) avec un composé de formule générale (7)

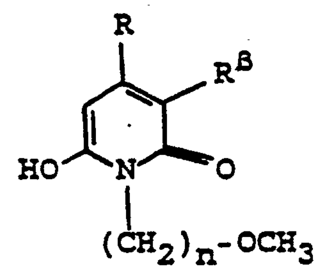

(7)

(dans laquelle R, $R^{\beta}$ et n ont les sens précités), ou en ce qu'on fait réagir en des quantités équivalentes un composé amino-azoïque de formule générale (8)

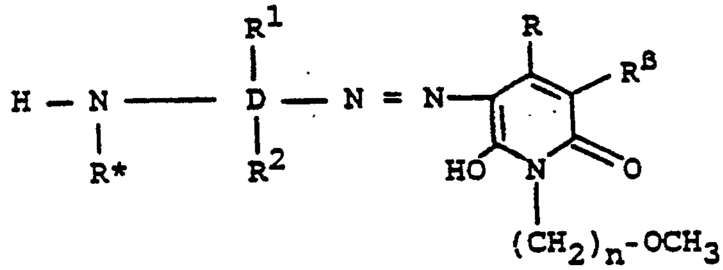

(8)

(dans laquelle D, $R^1$, $R^2$, $R^{\beta}$, R* et n ont les sens précités) avec un composé de formule générale (9)

$Z'-Y^1$ (9)

(dans laquelle Z' représente un reste Z ayant le sens indiqué ci-dessus et qui est dépourvu du groupement -N(R*)-, et $Y^1$ représente un substituant pouvant être séparé sous forme d'un anion, de préférence un atome d'halogène), ou
en ce qu'on fait réagir un composé de formule générale (12)

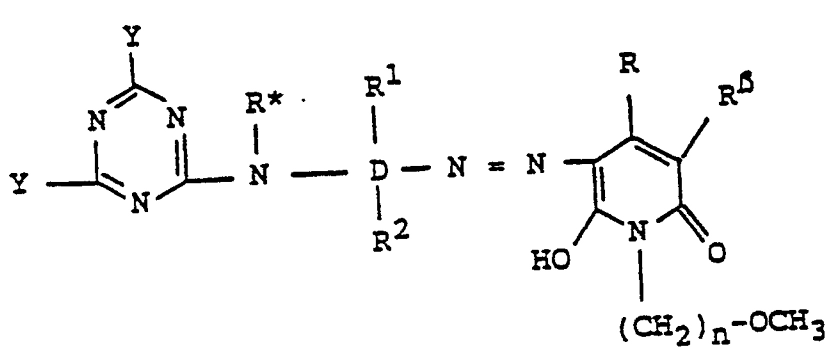

(12)

(dans laquelle R*, $R^1$, $R^2$, R, $R^\beta$, D et n ont les sens précités) avec une amine de formule générale $HNR^3R^4$ dans laquelle $R^3$ et $R^4$ ont les sens précités,
ou bien en ce que, pour préparer un composé azoïque de formule (1) dans laquelle $R^\beta$ représente un groupe carbamoyle, ont fait réagir un composé azoïque répondant à la formule générale (1) citée et définie ci-dessus, dans laquelle $R^\beta$ représente cependant le groupe cyano, avec de l'acide sulfurique aqueux à 90 jusqu'à 98 %, en opérant à une température comprise entre 70 et 90 °C.

2. Procédé selon la revendication 1, caractérisé en ce que X représente le groupe vinyle ou le groupe $\beta$-thiosulfatoéthyle, $\beta$-phosphatoéthyle, $\beta$-chloréthyle ou $\beta$-sulfatoéthyle.

3. Procédé selon la revendication 1, caractérisé en ce que X représente le groupe $\beta$-sulfatoéthyle

4. Utilisation, comme colorant, d'un composé répondant à la formule générale (1), citée et définie à la revendication 1, ou d'un composé monoazoïque de formule (1), préparé selon la revendication 1.

5. Utilisation selon la revendication 4 pour teindre ou imprimer de la matière contenant des groupes hydroxy-et/ou carboxamide, avantageusement de la matière fibreuse.

6. Procédé pour teindre (ce qui comprend l'impression) une matière contenant des groupes hydroxy et/ou carboxamide, en particulier de la matière fibreuse, selon lequel on applique un colorant sur la matière et on l'y fixe à l'aide de la chaleur ou à l'aide d'un composé capable de fixer les acides, procédé caractérisé en ce qu'on utilise comme colorant un composé répondant à la formule générale (1), citée et définie à la revendication 1 ou un composé de formule (1), préparé selon la revendication 1.